# EUROPEAN PATENT APPLICATION

(11) **EP 2 783 558 A1**
(43) Date of publication of application: **01.10.2014**
(21) Application number: 13161679.9
(22) Date of filing: 28.03.2013
(51) Int. Cl.: A01B 13/16

(54) **Agricultural ridge former, tractor and use thereof**

(71) Applicant: AVR, 8800 Roeselare (BE)
(72) Inventor: Top, Stefan, B-8980 Zonnebeke (BE)
(74) Representative: Duyver, Jurgen Martha Herman

(57) **Abstract**

Agricultural ridge former (1) for forming a ridge (15) along a moving direction (2) with an adjacent furrow (16) comprising a ridge forming element (3) for forming ridges (15) and adjacent furrows (16) in soil, a separate dam forming element (4) for forming dams crossing the furrow (16), the dam forming element (4) being provided so that it travels along a furrow (16) created by the ridge forming element (3) and is movable between a first (5) and a second position (6), the dam forming element (4) in the first position (5) being provided to scrape up soil into the furrow (16) such as to form a dam, the dam forming element (4) in the second position (6) being provided to be moved over the previously created dam, and an actuator (7) provided to the dam forming element (4) for moving the dam forming element (4) between the first (5) and the second position (6), characterized in that the actuator (7) is a fluid powered actuator (7).

## Description

The current invention relates to an agricultural ridge former according to the preamble of the first claim.

The present invention also relates to the use of the agricultural ridge former.

Such agricultural ridge formers are already known to the person skilled in the art. US2226575 for example describes an agricultural ridge former for forming a ridge along a moving direction with an adjacent furrow. The agricultural ridge former comprises a ridge forming element for forming ridges and adjacent furrows in soil, a separate dam forming element for forming dams crossing the furrow and an actuator provided to the dam forming element for moving a dam forming element between a first and a second position. The dam forming element being provided so that it travels along a furrow created by the ridge forming element and is movable between a first and a second position, the dam forming element in the first position being provided to scrape up soil into the furrow such as to form a dam, the dam forming element in the second position being provided to be moved over the previously created dam. The dam forming element is tiltably mounted to the remainder of the ridge former and comprises a plate shaped scraping element with the plane of the shape oriented substantially perpendicular to the ridge. A mechanical sensor element is mechanically interconnected to the dam forming element such that when the dam reaches a predetermined height, the dam pushes onto the mechanical sensor element which in turn actuates the dam forming element from the first to the second position. When the mechanical sensor element no longer contacts the dam, it returns to its initial position together with actuating the dam forming element back from the second position to the first position such that a new dam is being formed.

However, such agricultural ridge formers have the problem that when they are driven at relatively high speeds, there exists a risk that the mechanical sensor element is no longer moved by the created dam and therefore does no longer actuate the dam forming element correctly. As a consequence in such situations, the dams are no longer formed as desired. Therefore, the speed at which the agricultural ridge formers can be driven is rather limited.

Therefore, it is an aim of the current invention to provide a agricultural ridge former which can be driven at higher speeds without for example decreasing the number of desired dams in the furrow.

This is achieved according to the agricultural ridge former according to the characterizing part of the first claim.

Thereto, the actuator is a fluid powered actuator.

It has been found that fluid powered actuators, such as for example hydraulic and/or pneumatic actuators, can drive the dam forming element between the first and the second position without being dependent on the properties of the created dam, for example without requiring mechanical sensing means for sensing the height of the dam, but instead allow the dam forming element to be moved between the first and the second position based on the desired frequency of the dam along the furrow. The desired frequency of the dams along the furrow, for example expressed in number of dams per unit length, can then for example be linked to the actual speed of the agricultural ridge former, for example by multiplying the speed of the agricultural ridge former with the desired frequency of the dams along the furrow, such that the number of times, the actuator needs to move the dam forming element from the first to the second position, the actuating frequency, can be determined.

Moreover, fluid powered actuators have been found to allow high actuating frequencies which are far more difficult to achieve with mechanical configurations as described above. In addition fluid powered actuators have been found to allow to transmit relatively large forces such that also relatively heavy soils can be worked.

Although US4257487 describes an agricultural ridge former with a fluid powered actuator, the ridge forming element and the dam forming element are not separate from each other and are in the form of a single element provided to be moved between a first and a second position by the fluid powered actuator. However, in such an embodiment the dam forming element is required to be relatively large and heavy such that it becomes difficult to achieve high actuating frequencies.

According to preferred embodiments of the current invention, the dam forming element is tiltably mounted to the remainder of the ridge former. It has been found that such mounting of the dam forming element improves the ability of the dam forming element to work at relatively high actuating frequencies.

According to preferred embodiments of the current invention, the dam forming element comprises a plate shaped scraping element with the plane of the shape oriented substantially perpendicular to the ridge. Such a plate shaped scraping element has been found to relatively easy allow relatively high actuating frequencies as it can be made relatively light.

According to preferred embodiments of the current invention, the scraping element is tiltably mounted to the remainder of the ridge former and is attached to the actuator. It has been found that such configuration further improves the ability to use relatively high actuating frequencies.

According to preferred embodiments of the current invention, the ridge forming element is provided to form at least two ridges with a furrow adjacent to and in between the two ridges and wherein the dam forming element is provided with respect to the ridge forming element such that in the first position soil is being scraped up into the furrow such as to create a dam interconnecting the ridges and crossing the furrow in between the ridges. It has been found that such embodiments allow dams to be created in subsequent furrows which have a better sealing between two adjacent ridges.

According to preferred embodiments of the current invention, the actuator is a pneumatic actuator. Such an actuator allows further improved actuating frequencies. Although pneumatic actuators are preferred, it has been found that hydraulic actuators allow transmitting relatively large forces such that also more heavy soils can be worked.According to preferred embodiments of the current invention, the dam forming element is springingly provided to the ridge forming element. Such an arrangement allows to further decrease weight of the dam forming element as the relatively large forces on the dam forming element can at least partly be absorbed by the springing arrangement.

According to preferred embodiments of the current invention, a ground loosener, for example a soil engaging element which in use at least partly protrudes into the soil, is provided in between the ridge forming element and the dam forming element along the moving direction, for loosening soil after forming a ridge and an adjacent furrow. Such a ground loosener has been found to reduce the forces working on the dam forming element making it thus for example possible to further reduce the weight of the dam forming element allowing further increased actuating frequencies and also allowing to work in more heavy soils.

According to preferred embodiments of the current invention, the soil engaging element is springingly provided to the ridge forming element. Such an arrangement allows to further decrease the relatively large forces on the soil engaging element which can at least partly be absorbed by the springing arrangement.

According to preferred embodiments of the current invention, the agricultural ridge former comprises at least one spring element, preferably of sheet metal, connecting the soil engaging element and/or dam forming element to the ridge forming element. Such an arrangement allows to further decrease the relatively large forces on the soil engaging element and/or the dam forming element as the forces can at least partly be absorbed by the spring element.

The invention also relates to the use of the agricultural ridge former according to the invention.

According to preferred embodiments of the current invention, the dam forming element is driven from the first to the second position in function of the speed of the agricultural ridge former. According to further preferred embodiments of the current invention, the agricultural ridge former thereto for example comprises speed sensing means for detecting the speed of the agricultural ridge former connected to a processor calculating the actuating frequency for the actuator depending on the desired number of dams long the furrow, for example by multiplying the speed of the agricultural ridge former with the desired frequency of the dams along the furrow, being for example expressed in number of dams per unit length, the processor being connected to the actuator and driving the actuator in a movement such that actuator moves the dam forming element the desired number of times from the first to the second position and the desired number of dams is created along the furrow.

According to preferred embodiments of the current invention, the agricultural ridge former is used to form ridges with dams in between. It can be used in agriculture for any agricultural product (such as for example potato, carrots or any other tuberous plant, corn, asparagus, smallanthus sonchifolius, manihot esculenta, etc ) cultivated in or on ridges, especially in hilly fields, subject to erosion.

The invention will be further elucidated by means of the following description and the appended figures.
Figure 1 shows a side view of a preferred embodiment of the agricultural ridge former according to the current invention.
Figure 2 shows a different state of the side view of figure 1.
Figure 3 shows a view in perspective of the agricultural ridge former according to figure 1.
Figure 4 shows a view in perspective of the agricultural ridge former attached to a tractor while in use to work soil.

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto. The drawings included and described herein are schematic and are not limiting the scope of the invention. It is also noted that in the drawings, the size of some elements may be exaggerated and, therefore, not drawn to scale for illustrative purposes.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.
1. Agricultural ridge former
2. Moving direction
3. Ridge forming element
4. Dam forming element
5. First position
6. Second position
7. Actuator
8. Plate shaped scraping element
9. Ground loosener
10. Soil engaging element
11. Spring element
12. Mounting element
13. Mouldboard
14. Tilt axis
15. Ridge
16. Furrow

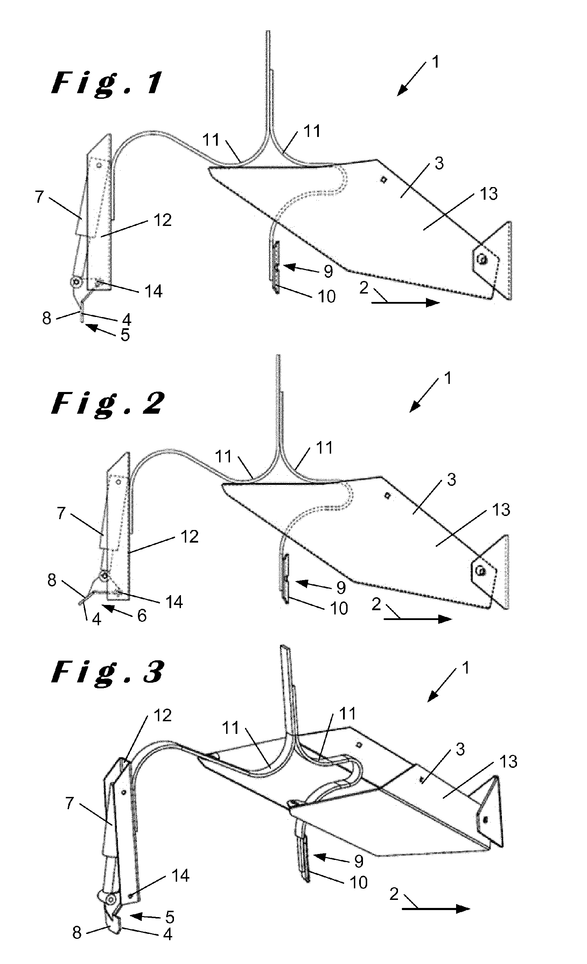

Figure 1 shows a side view of a preferred embodiment of the agricultural ridge former according to the current invention.

The agricultural ridge former 1 is provided for forming a ridge 15 along a moving direction 2 with an adjacent furrow 16. The agricultural ridge former 1 comprises a ridge forming element 3 for forming ridges 15 and adjacent furrows 16 in soil. The ridge forming element 3 can for example be in the form of at least one, for example metal, such as steel, preferably stainless steel, mouldboard 13, for example two mouldboards 13 as shown in figure 1. In such configuration, for example, the ridge forming element 3 is provided to form at least two ridges 15 with a furrow 16 adjacent to and in between the two ridges 15. The ridge forming element 3 can for example be in the form of a plough, provided with the mouldboard 13. The configuration of the ridge forming element 3 can however be determined by the person skilled in the art depending on the desired characteristics of the agricultural ridge former 1.

The ridge forming element 3 is provided to be drawn through soil such that ridges 15 are formed.

The agricultural ridge former 1 further is provided with a dam forming element 4 separate from the ridge forming element 3 for forming dams crossing the furrow 16 created by the ridge forming element 3. The dam forming element 4 shown in figure 1 comprises a plate shaped scraping element 8 with the plane of the shape oriented substantially perpendicular to the ridge 15. The plate shaped scraping element 8 can be made of any material deemed appropriate by the person skilled in the art such as for example metal, for example steel, preferably stainless steel. The shape and dimension of the plate shaped scraping element 8 can be determined by the person skilled in the art depending on the desired shape and dimensions of the dam keeping in mind the forces working on the plate shaped scraping element 8 depending on for example the soil in which it will be used and/or the speed with which it will be driven through the soil.

The dam forming element 4 is provided so that it travels along a furrow 16 created by the ridge forming element 3 and is movable between a first 5 lowered and a second 6 lifted position. More preferably, the dam forming element 4 is provided, for example by appropriate material and dimensions of the dam forming element, with respect to the ridge forming element 3 such that in the first lowered position 5 soil is being scraped up into the furrow 16 such as to create a dam interconnecting the ridges 15 and crossing the furrow 16 in between the ridges 15. Figure 1 for example shows that the dam forming element 4, more in particular the plate shaped scraping element 8, thereto for example is positioned in between the two mouldboards 13 along a direction substantially perpendicular to the moving direction. Figure 1 further for example shows that the dam forming element 4, more in particular the plate shaped scraping element 8, thereto for example is positioned behind the ridge forming element 13, more in particular the mouldboards 13, along the moving direction 2.

The height with which the dam forming element 4 is positioned with respect to the ridge forming element 3, can be determined by the person skilled in the art and depends for example from the desired height for the dam which is desired to be created.

The dam forming element 4 is shown in the first position 5 in figure 1 and in that position is provided to scrape up soil into the furrow 16 such as to form the dam. The dam forming element 4 is shown in the second lifted position 6 in figure 2 and is provided to be moved over the previously created dam.

As shown in figure 1 and 2, the dam forming element 4, more in particular the scraping element 8, is tiltably mounted to the remainder of the ridge former and more particularly is tiltably mounted to the agricultural ridge former 1 with respect to the ridge forming element 3. As the dam forming element 4 and the ridge forming element 3 are separate and the dam forming element 4 thus is movable between the first 5 and the second 6 position independently from the ridge forming element 3, the creation of ridges 15 and furrows 16 when using the agricultural ridge former does not need to be interrupted when dams need to be created. The dam forming element 4, more in particular the scraping element 8, is mounted to the agricultural ridge former with a tilt axis 14.

To move, in particular tilt, the dam forming element 4 an actuator 7 is provided, as shown in figure 1, to the dam forming element 4 for moving the dam forming element 4 between the first 5 and the second position 6. The actuator 7 shown in figure 1 is attached to the scraping element 8, more in particular at a distance from the tilt axis 14, at a first end part of the actuator 7 while a second end part of the actuator 7 is attached to a part of the agricultural ridge former 1 which is not provided to be tilted.

It is shown in figure 1 that the dam forming element 4, and the actuator 7 are mounted to a mounting element 12, with the second part of the actuator 7 being attached to the mounting element 12.

As shown in figure 1, preferably, the dam forming element 4 is springingly provided to the ridge forming element 3. In figure 1 this is shown to be obtained by springingly mounting the mounting element 12 to the ridge forming element 3. Further, figure 1 shows that thereto the agricultural ridge former 1 comprises at least one spring element 11, preferably from sheet metal, more preferably in the form of a piece of bended sheet metal as shown in figure 1, connecting the dam forming element 4 to the ridge forming element 3.

The mounting element 12 as shown in figure 1 is a piece of sheet material, for example metal sheet material, which can be brought into the desired shape by bending, welding, bolting, etc.

Figure 1 further shows that a ground loosener 9 is provided in between the ridge forming element 3 and the dam forming element 4 along the moving direction 2, for loosening soil after forming a ridge 15 and an adjacent furrow 16. As shown, the ground loosener 9 preferably comprises a soil engaging element 10 in use at least partly protruding into the soil. Preferably, the soil engaging element 10 is springingly provided to the ridge forming element 3. Thereto, the agricultural ridge former 1, as shown in figure 1, preferably comprises at least one spring element 11, preferably of sheet metal, more preferably in the form of bended sheet metal, connecting the soil engaging element 10 to the ridge forming element 3. In the shown embodiment of figure 1, the soil engaging element 10 is and end part of the bended sheet metal.

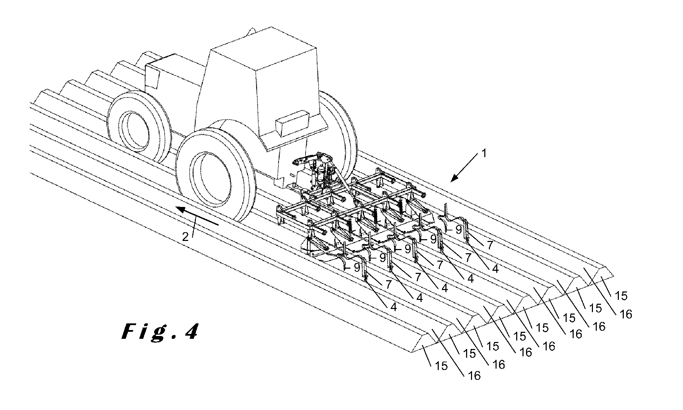

The agricultural ridge former 1 shown in figures 1 - 3 preferably is provided to be or is mounted to an agricultural tractor as shown in figure 4. Preferably, the spring element 11 springingly interconnects the dam forming element 4 and the ground loosener 9 if present to the tractor whereas the ridge forming element 3 is substantially rigidly mounted to the tractor. The agricultural ridge former 1 can be provided to be swiveled upwards between a first soil-engaging position in which the ridge forming element 3, in particular the mouldboard 13, is provided to engage or engage the soil and a second soil-non-engaging position wherein the ridge forming element 3, in particular the mouldboard 13, is not provided to engage the soil allowing the tractor to drive without working the soil, for example when driving to or from the worked field or the field to be worked.

Although figure 4 shows that the furrows 16 and the adjacent ridges 15 are already at least partially formed in front of the tractor, this is not critical for the invention and the soil may also be, for example, substantially unworked, for example substantially levelled.

Further figure 4 shows that the agriculrural ridge former 1 is attached behind the tractor. This is however not critical for the invention and the agricultural ridge former 1 can also be attached in the front or sideways, depending on the application and desired configuration.

## Claims

1. Agricultural ridge former (1) for forming a ridge (15) along a moving direction (2) with an adjacent furrow (16) comprising a ridge forming element (3) for forming ridges (15) and adjacent furrows (16) in soil, a separate dam forming element (4) for forming dams crossing the furrow (16), the dam forming element (4) being provided so that it travels along a furrow (16) created by the ridge forming element (3) and is movable between a first (5) and a second position (6), the dam forming element (4) in the first position (5) being provided to scrape up soil into the furrow (16) such as to form a dam, the dam forming element (4) in the second position (6) being provided to be moved over the previously created dam, and an actuator (7) provided to the dam forming element (4) for moving the dam forming element (4) between the first (5) and the second position (6), **characterized in that** the actuator (7) is a fluid powered actuator (7).

2. Agricultural ridge former (1) according to claim 1, **wherein** the dam forming element (4) is tiltably mounted to the remainder of the ridge former.

3. Agricultural ridge former (1) according to any one of the preceding claims, **wherein** the dam forming element (4) comprises a plate shaped scraping element (8) with the plane of the shape oriented substantially perpendicular to the ridge (15).

4. Agricultural ridge former (1) according to claim 3 in combination with claim 2, **wherein** the scraping element (8) is tiltably mounted to the remainder of the ridge former and is attached to the actuator (7).

5. Agricultural ridge former (1) according to any one of the preceding claims, **wherein** the ridge forming element (3) is provided to form at least two ridges (15) with a furrow (16) adjacent to and in between the two ridges (15) and wherein the dam forming element (4) is provided with respect to the ridge forming element (3) such that in the first position (5) soil is being scraped up into the furrow (16) such as to create a dam interconnecting the ridges (15) and crossing the furrow (16) in between the ridges (15).

6. Agricultural ridge former (1) according to any one of the preceding claims, **wherein** the actuator (7) is a pneumatic actuator (7).

7. Agricultural ridge former (1) according to any one of the preceding claims, **wherein** the dam forming element (4) is springingly provided to the ridge forming element (3).

8. Agricultural ridge former (1) according to any one of the preceding claims, **wherein** a ground loosener (9) is provided in between the ridge forming element (3) and the dam forming element (4) along the moving direction (2), for loosening soil after forming a ridge (15) and an adjacent furrow (16).

9. Agricultural ridge former (1) according to claim 8, **wherein** the ground loosener (9) comprises a soil engaging element (10) in use at least partly protruding into the soil.

10. Agricultural ridge former (1) according to claim 9, **wherein** the soil engaging element (10) is springingly provided to the ridge forming element (3).

11. Agricultural ridge former (1) according to any one of the preceding claims in combination with at least claim 7 and/or 10, **wherein** the agricultural ridge former (1) comprises at least one spring element (11) connecting the soil engaging element (10) and/or dam forming element (4) to the ridge forming element (3).

12. Agricultural ridge former (1) according to claim 11, **wherein** the spring element (11) is of sheet metal.

13. Agricultural tractor comprising the agricultural ridge former (1) according to any one of claims 1 - 12.

14. Use of the agricultural ridge former (1) or the tractor according to any one of the preceding claims.

15. Use according to claim 14, **wherein** the dam forming element (4) is driven from the first to the second position (6) in function of the speed of the agricultural ridge former (1).

16. Use according to claim 14 or 15, **wherein** the agricultural ridge former (1) is used to form ridges for an agricultural product cultivated in or on the ridges, for example potatoes.
